Europäisches Patentamt

European Patent Office

Office européen des brevets

(19)

(11) Numéro de publication : **0 149 377**
**B1**

(12) **FASCICULE DE BREVET EUROPÉEN**

(45) Date de publication du fascicule du brevet :
02.03.88

(51) Int. Cl.⁴ : **H 02 G   3/04**, E 04 F  19/04

(21) Numéro de dépôt : **84402470.3**

(22) Date de dépôt : **03.12.84**

(54) Goulotte composite, à élément(s) rapporté(s), notamment pour logement de câbles électriques.

(30) Priorité : **07.12.83 FR 8319563**

(43) Date de publication de la demande :
**24.07.85 Bulletin 85/30**

(45) Mention de la délivrance du brevet :
**02.03.88 Bulletin 88/09**

(84) Etats contractants désignés :
**AT BE DE FR GB IT NL SE**

(56) Documents cités :
**DE-A- 2 352 397**
**FR-A- 1 469 175**
**FR-A- 2 433 701**
**US-A- 2 478 006**
**US-A- 4 270 020**

(73) Titulaire : **LEGRAND**
**128 Avenue du Maréchal de Lattre de Tassigny**
**F-87045 Limoges Cédex (FR)**

(72) Inventeur : **Buard, Yvon**
**Le Pont**
**F-53600 Voutre (FR)**

(74) Mandataire : **CABINET BONNET-THIRION**
**95 Boulevard Beaumarchais**
**F-75003 Paris (FR)**

Jouve, 18, rue St-Denis, 75001 Paris, France

## Description

La présente invention concerne d'une manière générale les goulottes ou autres conduits, du type de ceux usuellement implantés en plinthe sur les murs de certains locaux pour le logement de câbles électriques ou de quelconques autres canalisations.

Globalement, une telle goulotte comporte un corps à profil transversal en U et un couvercle propre à la fermeture d'un tel corps.

A ce jour, le corps est usuellement en matière synthétique, dite plastique, et il en est de même du couvercle.

Cependant, pour répondre à une éventuelle exigence particulière d'esthétique, ou satisfaire à d'éventuelles exigences de résistance mécanique, il a déjà été proposé des goulottes dont tant le corps que le couvercle sont en métal, et plus précisément en aluminium.

Mais de telles goulottes sont inévitablement onéreuses, ce qui en limite l'emploi.

En outre, elles ne sont pas isolantes, ce qui, s'agissant du logement de câbles électriques, n'est pas sans impliquer un certain danger.

La présente invention a d'une manière générale pour objet une disposition permettant, par une association judicieuse d'une âme, en pratique en matière synthétique et d'un élément rapporté, par exemple en métal, d'éviter ces inconvénients, et conduisant en outre à d'autres avantages.

De manière plus précise, elle a pour objet une goulotte du genre comportant un corps en matière synthétique à profil transversal en U apte à être appliqué par sa semelle à un quelconque support et un couvercle propre à la fermeture dudit corps, cette goulotte étant caractérisée en ce que ledit corps comporte, extérieurement, des moyens d'engagement propres à permettre d'y rapporter par simple emboîtement, sur une partie au moins de sa surface extérieure, indépendamment de son couvercle, au moins un élément muni à cet effet de moyens d'engagement complémentaires.

Il peut s'agir, par exemple, d'un élément de revêtement en métal, et par exemple en aluminium, et, en sus d'un éventuel élément de revêtement particulier pour le couvercle, il y a ainsi, de préférence, un élément de revêtement distinct pour chacun des flancs du corps.

Suivant une première forme de mise en œuvre possible, les éléments de revêtement ainsi mis en œuvre peuvent présenter par eux-mêmes une épaisseur suffisante pour être manipulables isolément.

Ils peuvent dès lors être livrés indépendamment du corps auquel ils sont associés, ce qui permet de ne les mettre en place sur celui-ci qu'après sa pose, au terme ultime de la finition des locaux concernés, et ce qui permet donc de pallier les conséquences des inévitables bavures ou maculages dont ne peut manquer d'être l'objet un tel corps au cours d'une telle finition.

Mais, en variante, suivant une deuxième forme

de mise en œuvre possible de l'invention, les éléments de revêtement ainsi associés au corps d'une goulotte suivant l'invention peuvent par avance être mis en place sur celui-ci, avant sa commercialisation, et il en est de même pour le couvercle associé, la goulotte suivant l'invention étant dès lors livrée à ses utilisateurs déjà équipés de ces éléments de revêtement.

Dans tous les cas, l'intégrité de l'isolation qu'elle offre se trouve avantageusement préservée, notamment au droit de sa semelle, ladite semelle, qui est de préférence dépourvue de tout élément de revêtement, au moins sur sa partie courante, pouvant, si désiré, être traversée, pour sa fixation, par un quelconque moyen d'assujettissement, sans risque d'un contact électrique intempestif d'un tel moyen d'assujettissement avec un quelconque organe métallique, étant entendu qu'elle peut d'ailleurs aussi bien être fixée par collage si désiré.

En outre, par leur esthétique propre, les éléments de revêtement suivant l'invention constituent avantageusement, pour une telle goulotte, des enjoliveurs métalliques susceptibles de satisfaire aux exigences en la matière.

Mais, par rapport à une goulotte comparable entièrement métallique, le prix de l'ensemble se trouve avantageusement réduit.

Il en est de même de son poids, les éléments de revêtement suivant l'invention pouvant avantageusement former à cet égard de simples raidisseurs par rapport au corps et/ou au couvercle qu'ils doublent, notamment lorsqu'ils présentent une épaisseur suffisante.

Bien entendu, les éléments de revêtement rapportés suivant l'invention ne sont pas nécessairement en métal, bien qu'un tel matériau convienne tout particulièrement à leur constitution.

Ils peuvent en effet aussi bien être en matière synthétique, et, suivant notamment l'esthétique recherché, il est ainsi possible de prévoir, si désiré, des éléments de revêtement de couleur contrastée par rapport à celle du corps et/ou du couvercle concernés, qui, eux, sont préférentiellement en matière synthétique.

Dans tous les cas, la goulotte suivant l'invention se caractérise par une structure composite, cette goulotte comportant, en sus de son corps et de son couvercle, au moins un élément, en l'espèce un élément de revêtement, rapporté sur un tel corps ou sur un tel couvercle.

Il n'en est pas de même dans les goulottes du même genre connues à ce jour, et notamment dans celle faisant par exemple l'objet de la demande de brevet français FR-A-2 433 701 ; dans cette demande, l'élément rapporté sur le corps ne constitue que l'usuel couvercle associé à celui-ci.

Corollairement, dans la demande de brevet allemand DE-A-2 352 397, il ne s'agit pas d'une goulotte au sens de la présente demande, c'est-à-dire d'une goulotte apte à être appliquée par sa semelle sur un quelconque support, avec sa concavité formée du côté opposé à celui-ci pour servir de logement à des conduits ou à des conducteurs, mais d'un simple capot destiné à coiffer des conduits ou conducteurs déjà en place sur un tel support, avec sa concavité tournée vers celui-ci.

En outre, la pièce alors rapportée sur le capot ne constitue pas non plus un couvercle au sens de la présente demande, c'est-à-dire une pièce prévue pour la fermeture d'un logement, mais un simple cache destiné à ne pas laisser à la vue les vis assurant par ailleurs la fixation du capot.

Enfin, et surtout, ce cache ne s'étend que sur une partie des flancs du capot, ce qui ne lui permettrait pas de dissimuler en toute certitude les souillures qui pourraient entacher celui-ci s'il était placé avant l'exécution des travaux de finition, peinture ou autre, des locaux concernés.

Mais, en réalité, non indispensable à la pose des conduits ou conducteurs concernés, ce capot est destiné à n'être mis en place qu'après l'exécution de ces travaux de finition.

Il n'en est pas de même avec la goulotte objet de la présente demande qui est elle évidemment destinée à être mise en place avant ces travaux de finition, pour permettre aux corps de métier concernés par la pose des conduits ou conducteurs correspondants d'intervenir avant ceux-ci.

Comme indiqué ci-dessus, les éléments de revêtement prévus suivant l'invention permettent alors de masquer les inévitables souillures pouvant intervenir lors de tels travaux de finition.

Enfin, suivant un développement, la présente invention peut avantageusement conduire, si désiré, à des produits composables à volonté.

En effet, suivant ce développement, un élément rapporté suivant l'invention, qui est alors associé au corps de la goulotte concernée, ne constitue plus un simple élément de revêtement, comme précédemment, mais un élément d'assemblage, c'est-à-dire une pièce de liaison, qui, en substitution à au moins un tel élément de revêtement, et munie, comme cet élément de revêtement, de moyens d'engagement propres à venir en prise avec ceux correspondants dudit corps, est apte à assurer l'assujettissement de celui-ci au corps d'une autre goulotte de type similaire.

Il est ainsi avantageusement possible de regrouper, de manière modulaire, une ou plusieurs goulottes, par exemple sous la forme de montants ou poteaux, ce qui ouvre avantageusement un nouveau champ d'application et d'utilisation à de telles goulottes.

Les caractéristiques et avantages de l'invention ressortiront d'ailleurs de la description qui va suivre, à titre d'exemple, en référence aux dessins schématiques annexés sur lesquels :

la figure 1 est une vue en coupe transversale d'une goulotte suivant l'invention ;

la figure 2 est une vue reprenant, de manière éclatée, celle de la figure 1 ;

la figure 3 est une vue en coupe transversale d'une pièce de liaison susceptible d'être associée à la goulotte suivant l'invention ;

la figure 4 est une vue en coupe transversale illustrant la mise en œuvre d'une telle pièce de liaison entre deux goulottes suivant l'invention ;

la figure 5 est une vue analogue à celle de la figure 4, pour un autre type de pièce de liaison ;

la figure 6 est également une vue analogue à celle de la figure 4, pour un regroupement d'un nombre supérieur de goulottes suivant l'invention ;

la figure 7 est une vue en coupe transversale analogue à celle de la figure 1 et concerne une variante de réalisation ;

la figure 8 est une vue reprenant, pour partie, et de manière éclatée, celle de la figure 7 ; les figures 9, 10, 11 sont des vues partielles en coupe transversale, qui, pour cette variante de réalisation, correspondent chacune respectivement à celles des figures 4, 5, 6 précédentes ;

la figure 12 est une vue en coupe transversale analogue à celle de la figure 1 et concerne une autre variante de réalisation ;

la figure 13 est une vue, qui, reprenant pour partie celle de la figure 12, illustre une phase de mise en œuvre de cette variante de réalisation.

Tel qu'illustré sur ces figures, une goulotte 10 suivant l'invention comporte, globalement, de manière connue en soi, un corps en matière synthétique 11 à profil transversal en U, et un couvercle 12 propre à la fermeture de celui-ci.

Le corps 11, qui est en pratique un profilé réalisé par extrusion, comporte, d'un seul tenant, une semelle 14, et, disposés chacun respectivement le long des bords de celle-ci, deux flancs latéraux 13.

Dans les formes de réalisation représentées, la semelle 14 a, transversalement, une structure en caisson, cette semelle 14 étant formée de deux parois 14A, 14B parallèles, qui, établies à distance l'une de l'autre, sont, de place en place, reliées longitudinalement l'une à l'autre par des traverses internes de cloisonnement 15.

En outre, la semelle 14 porte extérieurement, de place en place, longitudinalement en saillie sur sa face inférieure, des nervures de raidissement 16, qui, en pratique, sont chacune individuellement établies au droit d'une traverse interne de cloisonnement 15.

Transversalement, la largeur d'une telle semelle 14 est quelconque.

En pratique, deux largeurs L1, L2 distinctes, chacune mesurée au droit des flancs 13 correspondants, peuvent ainsi être prévues.

Pour la largeur L1 la plus faible, aucune cloison n'est prévue sur la face interne, supérieure, de la semelle 14.

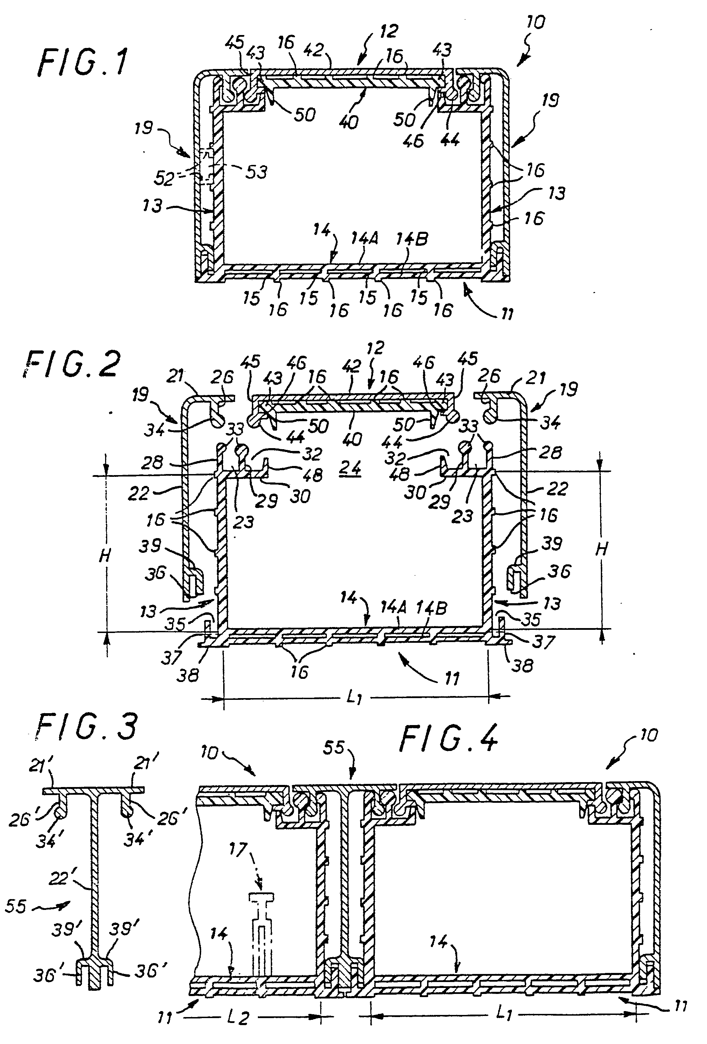

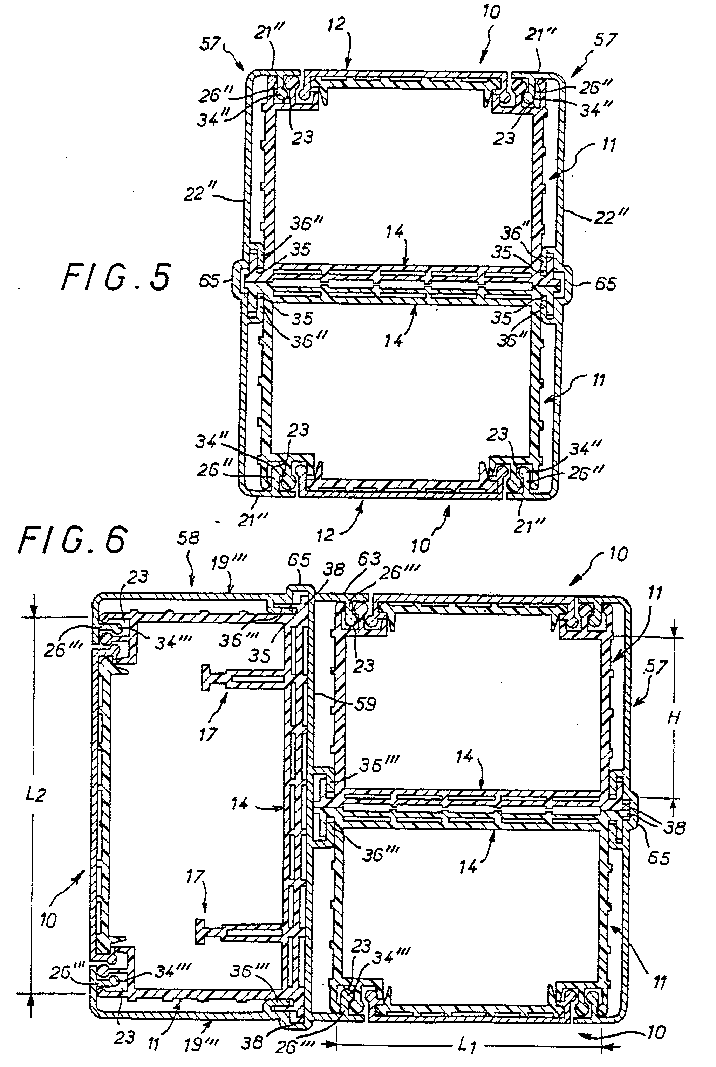

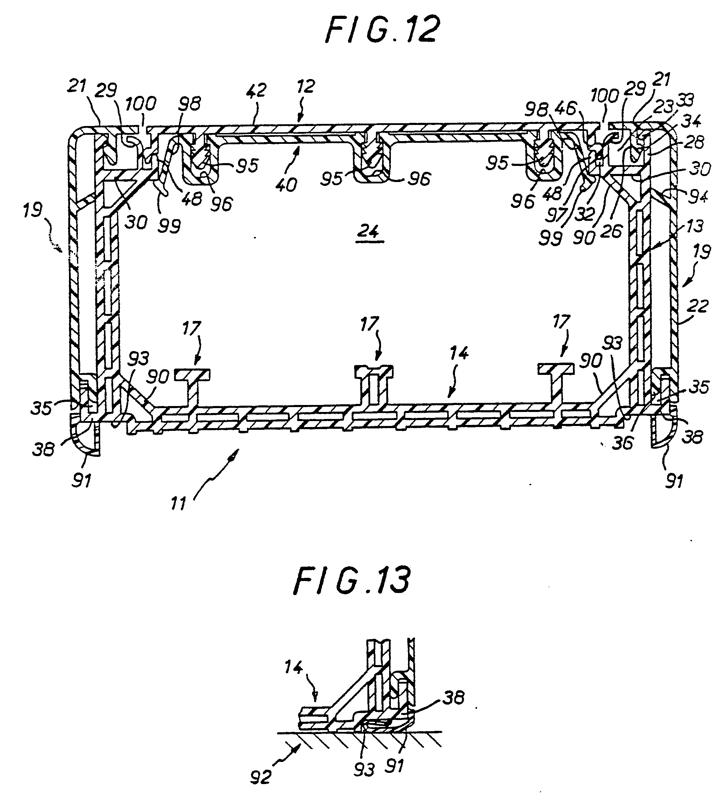

Par contre, pour la largeur L2 la plus grande, deux ou plusieurs cloisons internes 17 peuvent être prévues, longitudinalement en saillie sur la face interne de la semelle 14, à distance l'une de l'autre, tel que schématisé en traits interrompus pour l'une d'elles à la figure 4, et tel que visible en trait plein à la figure 6 ou à la figure 12.

Dans les formes de réalisation représentées, une telle cloison 17, ou l'une au moins de celles mises en œuvre, est, elle aussi, à double paroi, sur une partie au moins de sa hauteur à compter de la semelle 14, voire même sur la totalité de celle-ci.

Dans les formes de réalisation représentées, les flancs 13 s'étendent sensiblement perpendiculairement à la semelle 14 qu'ils encadrent, et ils ont sensiblement l'un et l'autre une même hauteur H à compter de celle-ci.

Dans les formes de réalisation plus particulièrement représentées sur les figures 1 à 11, ils sont à simple paroi, et, comme la semelle 14, ils présentent, de place en place, longitudinalement en saillie sur leur face externe, des nervures de raidissement 16.

Suivant l'invention, le corps 11 ainsi constitué, qui est apte à être appliqué par sa semelle 14 à un quelconque support, comporte extérieurement des moyens d'engagement propres à permettre d'y rapporter par simple emboîtement, sur une partie au moins de sa surface extérieure, indépendamment de son couvercle 12, au moins un élément, en l'espèce un élément de revêtement, muni à cet effet de moyens d'engagement complémentaires.

En pratique, dans les formes de réalisation représentées, il y a ainsi un élément de revêtement distinct 19 pour chacun des flancs 13 du corps 11.

Autrement dit, dans ces formes de réalisation, seule la surface extérieure des flancs 13 du corps 11 est recouverte d'un élément de revêtement, la surface extérieure de la semelle 14 de celui-ci restant par contre à découvert, au moins pour ce qui concerne sa partie courante.

Dans la forme de réalisation plus particulièrement représentée sur les figures 1 à 6, la section transversale des éléments de revêtement 19 rapportés suivant l'invention sur les flancs 13 du corps 11 a globalement une configuration en L, chacun de ces éléments de revêtement 19, qui sont identiques entre eux, en étant disposés symétriquement l'un par rapport à l'autre par rapport au plan médian de symétrie du corps 11, comportant deux ailes 21, 22 qui, bien que se raccordant l'une à l'autre par un large congé arrondi, sont sensiblement en équerre l'une par rapport à l'autre.

L'aile 21, qui est celle de moindre extension transversale, est destinée à s'étendre en façade, parallèlement à la semelle 14 du corps 11.

L'aile 22, qui est celle de plus grande extension transversale, est destinée à s'étendre latéralement, parallèlement au flanc 13 concerné dudit corps 11.

Les moyens d'engagement destinés à intervenir entre le corps 11 et un tel élément de revêtement 19 comportent, tout d'abord, en tête, pour le corps 11, une rainure 23, qui, prévue en façade, au voisinage du débouché 24 de ce corps 11, s'étend parallèlement audit débouché 24, et, pour l'élément de revêtement 19, une languette 26, propre à s'engager dans une telle rainure 23, et à s'y encliqueter.

En pratique, dans la forme de réalisation représentée, la rainure 23 ainsi prévue sur le corps 11 pour l'encliquetage de l'élément de revêtement 19 correspondant est formée entre deux languettes 28, 29 de ce corps 11, dont la première s'étend sensiblement dans le prolongement du flanc 13 correspondant de celui-ci, et dont la deuxième s'étend sensiblement parallèlement à la première, en saillie sur un retour 30 de ce flanc 13 dirigé transversalement vers le flanc 13 opposé.

Dans la forme de réalisation représentée sur les figures 1 à 6, cette rainure 23 est en pratique distincte de celle 32 prévue par ailleurs pour l'encliquetage, suivant des modalités décrites plus en détail ci-après, du bord correspondant du couvercle 12, cette rainure 32 étant présente en bout du retour 30 correspondant du flanc 13 concerné.

En outre, dans cette forme de réalisation, les languettes 28, 29 définissant la rainure 23 ont l'une et l'autre leur bord libre longitudinalement épaissi par un bourrelet 33, pour la définition, conjointement, d'un col d'introduction de largeur réduite pour la languette 26 de l'élément de revêtement 19 correspondant.

De même, le bord libre de cette languette 26 dudit élément de revêtement 19 est longitudinalement épaissi par un bourrelet 34.

En pratique, celui-ci s'étend pour l'essentiel du côté opposé à l'aile 22 associée.

En pratique, également, l'aile 21 s'étend au-delà de la languette 26 qu'elle porte, de manière à pouvoir recouvrir le bourrelet 33 de la languette 29 du corps 11.

Quoi qu'il en soit, la languette 26 ainsi portée par l'aile 21 de l'élément de revêtement 19 s'étend sensiblement parallèlement à l'aile 22 de celui-ci.

Les moyens d'emboîtement qui interviennent entre le corps 11 et un élément de revêtement 19 comportent, encore, en pied, dans la forme de réalisation représentée sur les figures 1 à 6, pour le corps 11, une rainure 35 qui, prévue latéralement, sur son flanc 13 correspondant, s'étend parallèlement à ce flanc 13, et, pour l'élément de revêtement 19, une languette 36, qui, complémentaire de ladite rainure 35, est adaptée à être emboîtée dans celle-ci.

En pratique, dans cette forme de réalisation, la rainure 35 du corps 11 est formée entre le flanc 13 concerné de celui-ci et une languette 38 qui, solidaire dudit flanc 13, en étant en saillie sur un prolongement 38 de la semelle 14, s'étend parallèlement à ce flanc 13, au pied de celui-ci, à la jonction de ce flanc 13 avec ladite semelle 14.

Conjointement, la languette 36 de l'élément de revêtement 19 s'étend parallèlement à l'aile 22 de celui-ci, au voisinage du bord libre de cette aile 22, et en direction de ce bord libre, à compter d'un retour 39 qui, perpendiculaire à ladite aile 22, la relie à celle-ci.

Par ailleurs, dans les formes de réalisation représentées, le couvercle 12 comporte lui aussi une âme en matière synthétique 40, à laquelle il est associé un élément de revêtement 42.

En pratique, dans les formes plus particulièrement représentées sur les figures 1 à 11, l'élément de revêtement 42, qui recouvre extérieurement l'âme 40, enveloppe l'un et l'autre des bords longitudinaux 43 de celle-ci, et c'est lui qui porte, extérieurement, les moyens d'emboîtement propres à l'encliquetage de l'ensemble sur le corps 11.

Ces moyens d'emboîtement sont constitués, dans ces formes de réalisation, par un bourrelet arrondi 44 présent le long du bord libre de chacun de deux retours 45 par lesquels l'élément du revêtement 42 contourne les bords correspondants 43 de l'âme 40, en se crochetant sur ceux-ci par une languette 46 parallèle à sa partie courante.

Les bourrelets 44 que présente ainsi le couvercle 12 sont destinés à coopérer avec les bourrelets 33 des languettes 29 du corps 11, cependant que les languettes 46 de son élément de revêtement 42 sont destinées à venir en appui sur la tranche de languettes 48 délimitant les rainures 32 correspondantes dudit corps 11.

Sur sa face tournée vers la partie courante de l'élément de revêtement 42 qui lui est associé, l'âme 40 présente, de place en place, longitudinalement en saillie, des nervures de raidissement 16.

Sur sa face opposée, elle présente, en saillie, pour guidage de l'ensemble lors de sa mise en place sur le débouché 24 du corps 11, des languettes 50 à flancs obliques vers l'extérieur.

Tel qu'illustré par la figure 2, les éléments de revêtement 19 associés au corps 11 peuvent être livrés indépendamment de celui-ci.

Il peut en être de même pour l'élément de revêtement 42 associé à l'âme 40 du couvercle 12, mais, celui-ci étant en pratique indispensable à la mise en place de ce couvercle 12 sur le corps 11, l'ensemble est de préférence livré prémonté, tel que représenté.

Après mise en place du corps 11 sur le mur à équiper, les éléments de revêtement 19 qui lui sont associés lui sont rapportés par simple emboîtement, par engagement de leurs languettes 26 et 36 dans les rainures 23 et 35 correspondantes du corps 11.

Après mise en place, dans ce corps 11, des câbles ou autres canalisations électriques à protéger, le couvercle 12 est lui-même mis en place sur ce corps 11, par emboîtement des bourrelets 44 de son élément de revêtement 42 dans les rainures 32 correspondantes dudit corps 11.

Sur les figures, il a été supposé que la surface extérieure des éléments de revêtement 19 et 42 était lisse.

Mais, bien entendu, elle peut par exemple comporter des nervures, ou toute autre saillie ou motif de nature à lui conférer, si désiré, un effet esthétique particulier.

De même, si désiré, l'aile 22 de l'un au moins des éléments de revêtement 19 peut comporter, en saillie sur sa surface interne, tel que schématisé en traits interrompus à la figure 1 pour l'un de ces éléments de revêtement 19, deux languettes 52 définissant entre elles une rainure 53 propre à la mise en place, s'il y a lieu, d'une vis ou autre élément de mise à la terre pour les câbles électriques concernés.

Dans tous les cas, au lieu d'être en métal, l'un au moins des éléments de revêtement 19, 42 mis en œuvre peut aussi bien être en matière synthétique, de couleur quelconque, assortie ou contrastée par rapport à celle du corps 11 ou couvercle 12 sur lequel il est rapporté.

Suivant un développement de l'invention illustré par les figures 3 à 6, un élément rapporté sur le corps 11 d'une goulotte 10 suivant l'invention, ou un au moins des éléments rapportés sur ce corps 11, constitue non plus un simple élément de revêtement 19, mais un élément d'assemblage, c'est-à-dire une pièce de liaison qui, en substitution à au moins un tel élément de revêtement 19, et munie, comme cet élément de revêtement 19, de moyens d'engagement propres à venir en prise avec ceux correspondants dudit corps 11, est apte à l'assujettissement de celui-ci au corps 11 d'une autre goulotte 10 de type similaire.

Dans la forme de mise en œuvre plus particulièrement illustrée par les figures 3, 4, la pièce de liaison 55 ainsi prévue est destinée à permettre le groupement par deux, côte à côte, du corps 11 de deux goulottes 10.

Elle correspond à une association, dos à dos, de deux éléments de revêtement 19.

C'est pourquoi des références numériques de même type que celles appliquées à ceux-ci seront utilisées ci-après pour la décrire, constituant par constituant.

Cette pièce de liaison 55 comporte dès lors, de part et d'autre d'une portion médiane 22' présentant, à sa base, sur chacune de ses faces, une languette 36' en bout d'un retour 39', deux ailes 21', présentant chacune, légèrement en retrait par rapport à son bord libre, une languette 26' à bourrelet arrondi 34'.

La pièce de liaison 55 ainsi constituée, qui a donc globalement une configuration en T, est propre à venir s'encliqueter par ses languettes 26' et 36' dans les rainures 23 et 35 correspondantes de deux corps 11 mis côte à côte, en sub-stitution aux éléments de revêtement 19 correspondants de ceux-ci.

Les corps 11 des goulottes 10 ainsi regroupés peuvent avoir transversalement une même largeur.

En variante, l'un peut avoir une largeur L1, l'autre une largeur L2 différente de la précédente.

Suivant la variante de mise en œuvre illustrée par la figure 5, le groupement de deux goulottes 10 se fait en adossant par leurs semelles 14 les corps 11 de celles-ci.

Il s'agit donc, dans ce cas, de corps 11 de même largeur L1, tel que représenté, ou L2.

Suivant cette mise en œuvre, deux pièces de liaison 57 sont utilisées, en étant chacune respectivement disposées latéralement de manière à recouvrir les flancs 13 correspondants de l'un et l'autre des corps 11 concernés.

Chacune de ces pièces de liaison 57 correspond globalement à un jumelage de deux éléments de revêtement 19, par mise bout à bout de ceux-ci par leur aile de plus grande extension 22.

La section transversale d'une telle pièce de liaison 57 est donc globalement en U, cette pièce de liaison 57 comportant une partie médiane 22″, à languettes 36″ dirigées l'une vers l'autre dans sa zone médiane, et deux ailes latérales 21″ à languette 26″ et bourrelet· arrondi 34″.

Par ses languettes 26″ et 36″, chacune des pièces de liaison 57 est engagée, par encliquetage ou glissement, dans les rainures 23 et 35 correspondantes des corps 11 à relier.

Ainsi qu'il est aisé de le comprendre, deux goulottes 10 ainsi adossées peuvent constituer conjointement un quelconque montant ou poteau.

Il en est de même dans la variante de mise en œuvre illustrée par la figure 6, suivant laquelle trois goulottes 10 sont regroupées en adjoignant à deux goulottes 10 dont le corps 11 a par exemple une largeur transversale égale à L1, tel que représenté, ou une largeur transversale égale à L2, une goulotte 10 supplémentaire dont le corps 11 a une largeur transversale égale à L2, en disposant cette dernière latéralement par rapport aux deux précédentes, avec la semelle 14 de son corps 11 perpendiculaire à celles du corps 11 de celles-ci, étant entendu que la largeur L2 est choisie pour correspondre globalement à deux fois la hauteur H des flancs 13 desdits corps 11, épaisseur de semelle 14 comprise.

Outre une pièce de liaison 57 disposée du côté opposé à la goulotte 10 de plus grande largeur L2, il est mis en oeuvre, dans ce cas, une pièce de liaison 58, qui enveloppe le corps 11 de cette goulotte de plus grande largeur L2, et qui présente à cet effet, de part et d'autre d'une partie médiane 59, deux ailes 19‴, qui, à la manière des éléments de revêtement 19, comportent chacune une languette 26‴ à bourrelet arrondi 34‴ et une languette 36‴, pour engagement dans les rainures 23 et 35 correspondantes dudit corps 11.

Sur sa face externe, la partie médiane 59 de cette pièce de liaison 58 présente, dans sa zone médiane, et dirigées l'une vers l'autre, deux languettes 36‴, pour engagement dans les rainures 35 du corps 11 des goulottes 10 adossées l'une à l'autre, et, au-delà d'une telle partie médiane 59, chacune de ses ailes latérales 19‴ comporte un prolongement 63 à languettes 26‴ et bourrelet arrondi 34‴ pour engagement dans les rainures 23 du corps 11 desdites goulottes 10.

Dans ce qui précède, les pièces de liaison 57 et 58 forment, longitudinalement, une saillie 65 au droit du ou des prolongements 38 correspondants de la ou des semelles 14 des corps 11 concernés, pour contournement du ou desdits prolongements 38.

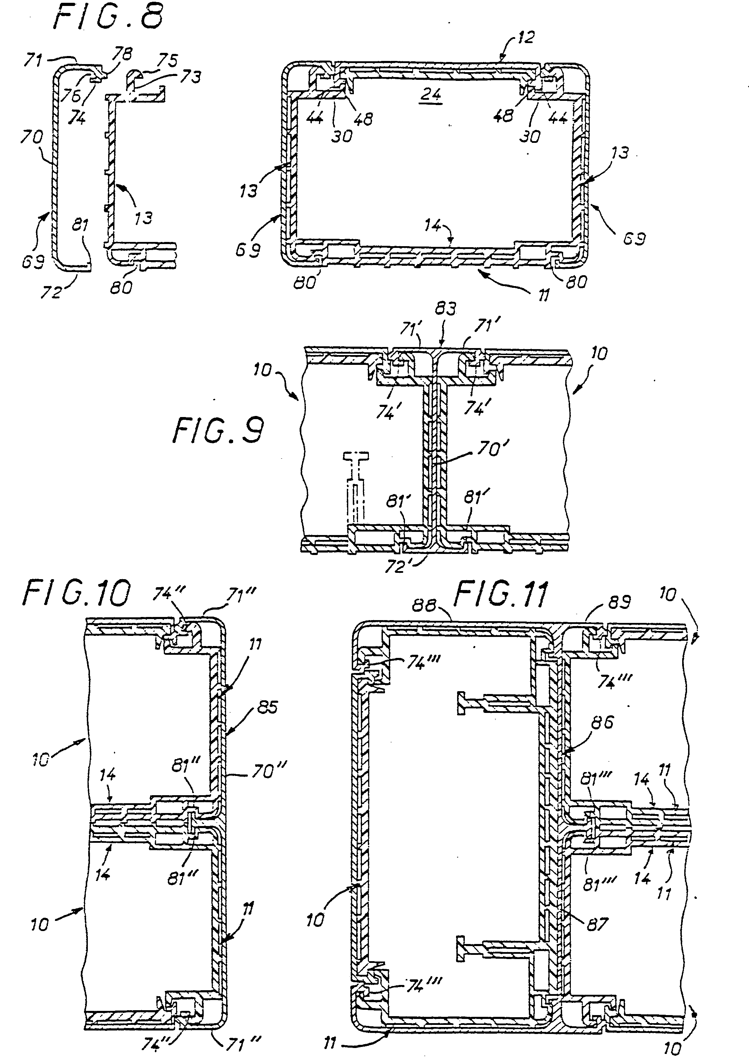

Il n'en est pas de même dans la forme de réalisation illustrée par les figures 7 à 11.

En effet, dans cette forme de réalisation, les moyens d'emboîtement correspondants n'interviennent pas sur les flancs 13 des corps 11.

Dans cette forme de réalisation, la section transversale de chacun des éléments de revêtement 69 associés aux flancs 13 d'un corps 11 a globalement une configuration en U, un tel élément de revêtement 69 comportant, disposées chacune respectivement de part et d'autre d'une partie médiane 70, deux ailes 71, 72 sensiblement parallèles l'une à l'autre.

Conjointement, les moyens d'emboîtement destinés à intervenir entre le corps 11 et un tel élément de revêtement 69 comportent, tout d'abord, en tête, pour le corps 11, une languette 73, prévue en façade, au voisinage de son débouché 24, et parallèlement à celui-ci, et, pour l'élément de revêtement 69, un retour 74, qui est prévu en saillie sur son aile 71, et par lequel il peut se crocheter sur ladite languette 73 du corps 11.

En pratique, dans la forme de réalisation représentée, la languette 73 du corps 11 présente elle-même, en direction opposée à l'élément de revêtement 69, un retour 75, dont est complémentaire une rainure 76 prévue à cet effet sur le retour 74 dudit élément de revêtement 69, sur la face interne de ce retour 74.

Conjointement, dans cette forme de réalisation, le retour 74 de l'élément de revêtement 69 comporte, extérieurement, des moyens d'emboîtement propres à l'encliquetage du bord correspondant du couvercle 12.

Il s'agit, en pratique, d'un bourrelet 78, correspondant, en relief, à ce que forme, en creux, la rainure 76 associée.

Par le bourrelet 44 correspondant de son élément de revêtement 42, qui est de section transversale anguleuse dans la forme de réalisation représentée, le couvercle 12 est adapté à s'encliqueter directement sur le bourrelet 78 de l'élément de revêtement 69.

Dans ce cas, il n'est donc pas prévu sur le corps 11 de rainures particulières pour l'emboîtement du couvercle 12.

Mais, comme précédemment, des retours 30 à languette 48 délimitent l'enfoncement d'un tel couvercle 12 dans le débouché 24 du corps 11.

Conjointement, les moyens d'emboîtement entre ce corps 11 et un élément de revêtement 69 comportent, encore, en pied, pour le corps 11, une rainure 80 qui est prévue extérieurement sur sa semelle 14, sur la face externe, ou inférieure, de celle-ci, et, pour l'élément de revêtement 69, un retour 81, qui est prévu en saillie sur son aile 72, et par lequel celui-ci peut se crocheter sur ladite semelle 14, par engagement dans ladite rainure 80 de celle-ci.

Comme précédemment, et tel qu'illustré par les figures 9 à 11, des pièces de liaison peuvent être substituées aux éléments de revêtement 69, pour le groupement de deux ou trois goulottes 10.

S'agissant, figure 9, du groupement côte à côte de deux goulottes 10, la pièce de liaison 83 mise en œuvre est une pièce à section transversale en I, comportant une partie médiane 70′, et des ailes 71′, à retour 74′, et 72′, à retour 81′, semblables, chacune respectivement, à la partie médiane 70 et aux ailes 71, 72 des éléments de revêtement 69.

S'agissant, figure 10, du groupement dos à dos de deux goulottes de même largeur transversale, il est mis en œuvre, suivant les mêmes dispositions que précédemment, deux pièces de liaison 85, comportant chacune une partie médiane 70″, à retours 81″ opposés l'un à l'autre dans sa partie médiane, et deux ailes 71″, à retour 74″, lesdits retours 81″ et 74″ étant chacun respectivement semblables aux retours 81 et 74 d'un élément de revêtement 69.

S'agissant, enfin, figure 11, du groupement de trois goulottes 10, dont deux adossées par la semelle 14 de leur corps 11 et la troisième disposée transversalement suivant la disposition décrite en référence à la figure 6, il est mis en œuvre, outre une pièce de liaison 85, non visible sur la figure, une pièce de liaison 86, comportant, une partie médiane 87 à retours 81‴ disposés en sens opposés l'un par rapport à l'autre dans sa partie médiane, et deux ailes 88 à retour 74‴ et prolongement 89 également à retour 74‴, lesdits retours 81‴ et 74‴ étant, chacun, respectivement, semblables aux retours 81 et 74 de l'élément de revêtement 69.

Les figures 12, 13 se rapportent à une variante de réalisation de la forme de réalisation décrite en référence aux figures 1, 2.

Dans cette variante de réalisation la semelle 14 du corps 11 porte en saillie, à l'intérieur dudit corps 11, trois cloisons internes 17, à profil en T, dont une, au moins, celle qui s'étend suivant l'axe de ladite semelle 14, est, de préférence, et tel que représenté, à double paroi, sur toute sa hauteur ; cette cloison interne peut être mise à profit pour l'encliquetage d'un séparateur ou la fixation d'un quelconque appareillage ; elle peut également être mise à profit pour la fixation, à l'aide de pointes ou de clous, de la goulotte à un quelconque support.

Il va de soi que toutes les cloisons internes 17, ou au moins plusieurs d'entre elles, peuvent ainsi être à double paroi.

Le long de ses bords, la semelle 14 du corps 11 se raccorde aux flancs 13 qui l'encadrent par des pans obliques 90, inclinés par exemple à 45°, qui raidissent les angles correspondants du corps 11.

Extérieurement, la semelle 14 du corps 11 porte en saillie, le long de ses bords, en pratique sur la face inférieure de ses prolongements 38, des bourrelets déformables 91.

Il s'agit en pratique de bourrelets creux, qui, réalisés par exemple en une matière plus souple que celle constitutive du corps 11, ou formés par un amincissement de celle-ci d'un seul tenant avec ledit corps 11, sont susceptibles de s'écraser lorsque le corps 11 est appliqué par sa semelle 14 à un quelconque support 92, figure 13, en palliant ainsi les éventuels défauts de planéité de celui-ci, au bénéfice de l'esthétique de l'ensemble.

Pour que la semelle 14 soit en mesure d'absorber ces bourrelets creux 91 lorsque ceux-ci sont ainsi écrasés, ses prolongements 38 sont en décrochement, en laissant ainsi chacun libre un logement 93 propre à une telle absorption.

Dans la forme de réalisation représentée, la section des bourrelets creux 91 est globalement en quart de cercle, et elle se rattache par chacun de ses bords au prolongement 38 correspondant de la semelle 14.

Par ailleurs, comme la semelle 14, et pour leur rigidification, les flancs 13 du corps 11 ont chacun une structure en caisson, à double paroi et traverses internes de cloisonnement dans cette variante de réalisation, et des pans obliques 90, inclinés par exemple à 45°, les reliant intérieurement à leurs retours 30, pour raidissement des angles correspondants dudit corps 11.

Comme précédemment, chacun de ces retours 30, porte une rainure 23 et une rainure 32, mais au lieu de comporter un bourrelet 33, la languette 29 séparant ces deux rainures se prolonge en arc de cercle en direction de la languette 28 associée, qui, elle, présente bien un tel bourrelet 33.

Comme précédemment, également, chaque élément de revêtement 19 a une configuration en L, avec, en façade, une aile 21 munie d'une languette 26 à bourrelet 34 pour engagement dans la rainure 23 du flanc 13 associé et coopération en encliquetage avec le bourrelet 33 de la languette 28 de celui-ci, les bourrelets 33 et 34 étant en forme de crochets tournés l'un vers l'autre dans cette variante de réalisation, et, latéralement, une aile 22 munie d'une languette 36 pour engagement dans la rainure 35 dudit flanc 13.

Mais, dans cette variante de réalisation, pour affermir son encliquetage, chaque élément de revêtement 19 comporte également, en saillie sur la surface interne de son aile 22, à proximité de son aile 21, une languette 94, qui, disposée obliquement, en étant dirigée vers ladite aile 21, et donc vers la languette d'encliquetage 26 portée par celle-ci, est adaptée à venir porter par sa tranche sur le flanc 13 concerné du corps 11.

Par ailleurs, dans cette variante de réalisation, l'élément de revêtement 42 que comporte le couvercle porte longitudinalement en saillie sur sa face interne des nervures 95, à section transversale à barbelures, par lesquelles, pour sa solidarisation à l'âme 40 à laquelle il est associé, il est engagé à force dans des gorges 96 prévues à cet effet sur ladite âme 40, ce qui facilite la fabrication et le montage de l'ensemble.

Latéralement, l'élément de revêtement 42 porte, le long de chacun de ses bords, par une languette 46 parallèle à sa partie courante, sur la languette 48 du flanc 13 correspondant, comme précédemment, mais, dans cette variante de réalisation d'une part cette languette 46 porte elle-même, perpendiculairement à ladite partie courante, une languette 97 qui s'engage dans la rainure 32 dudit flanc 13, et d'autre part, en coopération avec l'appui de l'élément de revêtement 42 sur la languette 48 des flancs 13 du corps 11, l'encliquetage de l'ensemble sur ledit corps 11 se fait par l'âme 40 associée, celle-ci présentant, le long de chacun de ses bords, une lèvre 98, qui s'étend en oblique vers le bas, avec, à son extrémité, un pan oblique d'engagement 99 de sens inverse, et qui est destinée à venir se crocheter sous le retour 30 du flanc 13 concerné, après une déformation élastique temporaire due à la venue en prise de son pan oblique d'engagement 99 avec la languette 48 portée à son extrémité par ledit retour 30.

Enfin, dans cette variante de réalisation, un dégagement 100 est laissé libre entre chacune des tranches latérales de l'élément de revêtement 42 du couvercle 12 et celle de l'aile 21 de l'élément de revêtement 19 du flanc 13 correspondant du corps 11, pour faciliter le démontage éventuel dudit couvercle 12 et/ou d'un tel élément de revêtement 19, par exemple par insertion de la lame d'un outil tel que tournevis.

Comme précédemment, un tel élément de revêtement 42 est en métal ou en matière synthétique.

Si désiré, le couvercle peut être monobloc, en métal ou en matière synthétique.

Dans tous les cas, l'élément rapporté suivant l'invention peut remplir d'autres fonctions que celle attachée à sa propre esthétique ou que sa propre fonction de renfort.

Par exemple, il peut servir de support à un quelconque élément de décor, moquette ou autre, ou à un quelconque élément de repérage.

Il suffit pour cela qu'il soit par exemple doté en surface de rainures, saillies ou autres propres à la mise en place, par exemple pour encliquetage, d'un tel élément de décor ou de repérage.

## Revendications

1. Goulotte du genre comportant un corps (11) en matière synthétique à profil transversal en U apte à être appliqué par sa semelle (14) à un quelconque support et un couvercle (12) propre à la fermeture dudit corps (11), caractérisée en ce que ledit corps (11) comporte extérieurement des moyens d'engagement propres à permettre d'y rapporter par simple emboîtement, sur une partie au moins de sa surface extérieure, indépendamment de son couvercle (12), au moins un élément (19, 69, 55, 57, 58, 83, 85, 86) muni à cet effet de moyens d'engagement complémentaires.

2. Goulotte suivant la revendication 1, caractérisée en ce que l'élément ainsi rapporté sur le corps (11) constitue un élément de revêtement (19, 69).

3. Goulotte suivant la revendication 2, caractérisée en ce que, l'élément de revêtement (19, 69) ainsi rapporté sur le corps (11) étant associé à l'un de ses flancs (13), il s'étend sur la majeure partie de celui-ci.

4. Goulotte suivant la revendication 2, caractérisée en ce qu'il y a un élément de revêtement (19, 69) distinct pour chacun des flancs (13) du corps (11).

5. Goulotte suivant l'une quelconque des revendications 3 ou 4 caractérisée en ce que les moyens d'engagement intervenant entre le corps (11) et un élément de revêtement (19), comportent, pour le corps, une rainure (23) qui, prévue en façade, au voisinage de son débouché (24), s'étend parallèlement audit débouché (24), et, pour l'élément de revêtement (19), une languette (26) propre à s'engager dans ladite rainure (23) et à s'y encliqueter.

6. Goulotte suivant la revendication 5, caractérisée en ce que la rainure (23) prévue sur le corps (11) pour encliquetage d'une languette (26) de l'élément de revêtement (19) est distincte de celle (32) qui y est prévue par ailleurs pour l'encliquetage du bord correspondant du couvercle (12).

7. Goulotte suivant l'une quelconque des revendications 3 ou 4 caractérisée en ce que les moyens d'emboîtement intervenant entre le corps (11) et un élément de revêtement (69) comportent, pour le corps (11), une languette (73), qui, prévue en façade, au voisinage de son débouché (24), s'étend parallèlement audit débouché (24), et, pour ledit élément de revêtement (69), un retour (74), qui est prévu en saillie sur une aile (71) dudit élément de revêtement (69), et par lequel celui-ci peut se crocheter sur ladite languette (73).

8. Goulotte suivant la revendication 7, caractérisée en ce que ladite languette (73) du corps (11) présente elle-même un retour (75), dont est complémentaire une rainure (76) prévue à cet effet sur celui (74) de l'élément de revêtement (69), sur la face interne de ce dernier.

9. Goulotte suivant l'une quelconque des revendications 7, 8, caractérisée en ce que le retour (74) de l'élément de revêtement (69) comporte extérieurement des moyens d'emboîtement propres à l'encliquetage du bord correspondant du couvercle (12).

10. Goulotte suivant l'une quelconque des revendications 5 à 9, caractérisée en ce que les moyens d'emboîtement intervenant entre le corps (11) et un élément de revêtement (19, 69) comportent, pour le corps (11), une rainure (35), qui, prévue latéralement, sur son flanc (13) correspondant, s'étend parallèlement à celui-ci, et, pour l'élément de revêtement (19, 69), une languette (36) complémentaire de ladite rainure (35).

11. Goulotte suivant la revendication 10, caractérisée en ce que ladite rainure (35) du corps (11) est formée entre le flanc (13) concerné de celui-ci et une languette (37) qui, solidaire dudit flanc (13), s'étend parallèlement à celui-ci.

12. Goulotte suivant l'une quelconque des revendications 10, 11, caractérisée en ce que ladite rainure (35) du corps (11) s'étend au pied du flanc (13) concerné de celui-ci, à la jonction de ce flanc (13) avec la semelle (14) associée.

13. Goulotte suivant l'une quelconque des revendications 10 à 12, caractérisée en ce que la section transversale de l'élément de revêtement (19) ainsi associé à l'un des flancs (13) du corps (11) a globalement une configuration en L, ledit élément de revêtement (19) comportant deux ailes (21, 22) sensiblement en équerre l'une par rapport à l'autre.

14. Goulotte suivant l'une quelconque des revendications 5 à 9, caractérisée en ce que les moyens d'emboîtement intervenant entre le corps (11) et un élément de revêtement (69) comportent, pour le corps (11), une rainure (80), qui est prévue, extérieurement, sur sa semelle (14), et, pour l'élément de revêtement (69), un retour (81), qui est prévu en saillie sur une aile (72) dudit élément de revêtement (69), et par lequel celui-ci peut se crocheter sur ladite semelle (14).

15. Goulotte suivant la revendication 14, caractérisée en ce que la section transversale de l'élément de revêtement (69) ainsi associé à l'un des flancs (13) du corps (11) a globalement une configuration en U, ledit élément de revêtement (69) comportant, disposées chacune respectivement de part et d'autre d'une partie médiane (70), deux ailes (71, 72) sensiblement parallèles l'une à l'autre.

16. Goulotte suivant l'une quelconque des revendications 13, 15, caractérisée en ce que chaque élément de revêtement (19) présente en saillie sur sa face interne une languette (94) adaptée à venir porter par sa tranche sur le flanc (13) concerné du corps (11).

17. Goulotte suivant l'une quelconque des revendications 1 à 16, caractérisée en ce que le couvercle (12) comporte lui aussi une âme (40) à laquelle il est associé un élément de revêtement (42).

18. Goulotte suivant la revendication 17, caractérisée en ce que ledit élément de revêtement (42) enveloppe l'un et l'autre des bords de l'âme (40) à laquelle il est associé, et c'est lui qui porte, extérieurement, les moyens d'emboîtement propres à l'encliquetage de l'ensemble sur le corps (11) associé.

19. Goulotte suivant la revendication 17, caractérisée en ce que, en coopération avec un appui de son élément de revêtement (42) sur les flancs (13) du corps (11), l'encliquetage du couvercle (12) sur ledit corps (11) se fait par son âme (40), ladite âme (40) présentant le long de chacun de ses bords une lèvre (98) par laquelle elle est apte à se crocheter sous un retour (30) du flanc (13) correspondant dudit corps (11).

20. Goulotte suivant l'une quelconque des revendications 2 à 19, caractérisée en ce qu'un élément de revêtement (19, 69, 42) est en métal.

21. Goulotte suivant l'une quelconque des revendications 2 à 19, caractérisée en ce qu'un élément de revêtement (19, 69, 42) est en matière synthétique.

22. Goulotte suivant l'une quelconque des revendications 1 à 21, caractérisée en ce qu'un élément rapporté sur son corps (11) constitue un élément d'assemblage, c'est-à-dire une pièce de liaison (55, 57, 58, 83, 85, 86), qui, en substitution à au moins un élément de revêtement (19, 69), et munie, comme cet élément de revêtement, de moyens d'engagement propres à venir en prise avec ceux correspondants dudit corps (11), est apte à assurer l'assujettissement de celui-ci au corps (11) d'une autre goulotte.

## Claims

1. A channel of the kind comprising a body (11) of synthetic material with a U-shaped profile in cross-section and capable of being applied by its base (14) to any support and a cover (12) for closing said body (11) characterised in that said body (11) externally comprises engagement means for permitting the fitting thereto by simple interlocking on a part at least of its outside surface, independently of its cover (12), of at least one element (19, 69, 55, 57, 58, 83, 85, 86) which is provided for that purpose with complementary engagement means.

2. A channel according to claim 1 characterised in that the element which is fitted in that way on to the body (11) constitutes a sheathing element (16, 69).

3. A channel according to claim 2 characterised in that, the sheathing element (16, 69) which is fitted in that way on to the body (11) being associated with one of the sides (13) thereof, it extends over the major part of said side.

4. A channel according to claim 2 characterised in that there is a separate sheathing element (16, 69) for each of the sides (13) of the body (11).

5. A channel according to either one of claims 2 and 4 characterised in that the engagement means operative between the body (11) and a sheathing element (19) comprise, in regard to the body, a groove (23) which, provided on the front face in the vicinity of its opening (24), extends parallel to said opening (24) and, in regard to the sheathing element (19), a tongue portion (26) capable of engaging into said groove (23) and snap fitting therein.

6. A channel according to claim 5 characterised in that the groove (23) provided on the body (11) for the snap fitting therein of a tongue portion (26) of the sheathing element (19) is separate from that (32) which is provided thereon for snap fitting of the corresponding edge of the cover (12).

7. A channel according to either one of claims 2 and 4 characterised in that the interlocking means operative between the body (11) and a sheathing element (69) comprise, in regard to the body (11), a tongue portion (73) which, provided on the front face in the vicinity of its opening (24), extends parallel to said opening (24) and, in regard to said sheathing element (69), a lip portion (74) which is provided in projecting relationship on a limb portion (71) of said sheathing element (69) and by way of which the latter can come into hooking engagement on said tongue portion (73).

8. A channel according to claim 7 characterised in that said tongue portion (73) on the body (11) itself has a lip portion (75) to which there is complementary a groove (76) which is provided for that purpose on the lip portion (74) of the sheathing element (69), on the inside surface thereof.

9. A channel according to either one of claims 7 and 8 characterised in that the lip portion (74) on the sheathing element (69) externally comprises interlocking means for snap engagement of the corresponding edge of the cover (12).

10. A channel according to any one of claims 5 to 9 characterised in that the interlocking means operative between the body (11) and a sheathing element (19, 69) comprise, in regard to the body (11), a groove (35) which, provided laterally on its corresponding side (13), extends parallel thereto and, in regard to the sheathing element (19, 69), a tongue portion (36) which is complementary to said groove (35).

11. A channel according to claim 10 characterised in that said groove (35) on the body (11) is formed between the side (13) in question thereof and a tongue portion (37) which, being fixed with respect to said side (13), extends parallel thereto.

12. A channel according to either one of claims 10 and 11 characterised in that said groove (35) on said body (11) extends at the base of the side (13) in question thereof, at the junction of said side (13) with the associated base (14).

13. A channel according to any one of claims 10 to 12 characterised in that the cross-section of the sheathing element (19) which is thus associated with one of the sides (13) of the body (11) is generally of a L-shaped configuration, said sheathing element (19) comprising two limb portions (21, 22) which are substantially in right-angled relationship with each other.

14. A channel according to any one of claims 5 to 9 characterised in that the engagement means operative between the body (11) and a sheathing element (69) comprise, in regard to the body (11), a groove 80) which is provided externally on the base (14) and, in regard to the sheathing element (69), a lip portion (81) which is provided in projecting relationship on a limb portion (72) of said sheathing element (69) and by way of which the latter can come into hooking engagement on said base (14).

15. A channel according to claim 14 characterised in that the cross-section of the sheathing element (69) which is thus associated with one of the sides (13) of the body (11) is generally of a U-shaped configuration, said sheathing element (69) comprising two limb portions (71, 72) which are in substantially parallel relationship with each other, each being disposed on respective sides of a central portion (70).

16. A channel according to either one of claims 13 and 15 characterised in that each sheathing element (19) is provided in projecting relationship on its inside surface with a tongue portion (94) adapted to come to bear by way of its edge against the side (13) in question of the body (11).

17. A channel according to any one of claims 1 to 16 characterised in that the cover (12) also comprises a web portion (40) with which a sheathing element (42) is associated.

18. A channel according to claim 17 characterised in that said sheathing element (42) encases both of the edges of the web portion (40) with which it is associated, and it is said sheathing element which externally bears the interlocking means for snap fitting of the assembly on to the associated body (11).

19. A channel according to claim 17 characterised in that, in co-operation with support of its sheathing element (42) against the sides (13) of the body (11), snap fitting of the cover (12) on to said body (11) is effected by means of its web portion (40), said web portion (40) being provided along each of its edges with a lip (98) by way of which it is capable of coming into hooking engagement under a lip portion (30) of the corresponding side (13) of said body (11).

20. A channel according to any one of claims 2 to 19 characterised in that a sheathing element (16, 69, 42) is of metal.

21. A channel according to any one of claims 2 to 19 characterised in that a sheathing element (16, 69, 42) is of synthetic material.

22. A channel according to any one of claims 1 to 21 characterised in that an element which is fitted on to the body (11) thereof constitutes an assembly element, that is to say a connecting portion (55, 57, 58, 83, 85, 86) which, as a replacement for at least one sheathing element (16, 69) and, like said sheathing element, provided with engagement means capable of coming into engagement with the corresponding engagement means of said body (11), is capable of providing for the fixing of the latter to the body (11) of another channel.

**Patentansprüche**

1. Kanalausbildung mit einem Gehäuse (11) aus Kunststoffmaterial mit U-förmigem Profil im Querschnitt, die mit ihrer Grundplatte (14) an einem beliebigen Träger anbringbar ist und mit einem zum Schließen des Gehäuses (11) bestimmten Deckel (12), dadurch gekennzeichnet, daß dieses Gehäuse (11) außen Eingriffseinrichtungen umfaßt, die geeignet sind, hierin durch einfaches Einstecken auf wenigstens einem Teil ihrer Außenfläche, unabhängig von ihrem Deckel (12) wenigstens ein Element (19, 69, 55, 57, 58, 83, 85, 86) aufzubringen, das hierzu mit komplementären Eingriffseinrichtungen versehen ist.

2. Kanalausbildung nach Anspruch 1, dadurch gekennzeichnet, daß das so auf den Körper (11) aufgesetzte Element ein Verkleidungselement (19, 69) bildet.

3. Kanalausbildung nach Anspruch 2, dadurch gekennzeichnet, daß das so auf das Gehäuse (11) aufgesetzte Abdeckelement (19, 69) einer ihrer Flanken (13) zugeordnet ist und sich über den grösseren Teil hiervon erstreckt.

4. Kanalausbildung nach Anspruch 2, dadurch gekennzeichnet, daß ein unterschiedliches Abdeckelement (19, 69) für jede der Flanken (13) des Gehäuses (11) vorgesehen ist.

5. Kanalausbildung nach einem der Ansprüche 2 oder 4, dadurch gekennzeichnet, daß die Eingriffseinrichtungen, die zwischen dem Gehäuse (11) und einem Verkleidungselement (19) zum Tragen kommen, für das Gehäuse eine Nut (23) aufweisen, die, vorgesehen auf der Fassade, benachbart ihrem Durchgangsprofil (24) sich parallel zu diesem Durchgangsprofil (24) erstreckt und für das Verkleidungselement (19) eine Zunge (26) derartiger Ausbildung aufweisen, daß sie in diese Nut (23) greift und hierin einrastet.

6. Kanalausbildung nach Anspruch 5, dadurch gekennzeichnet, daß die auf dem Gehäuse (11) vorgesehene Nut (23), zum Einrasten einer Zunge (26) des Verkleidungselements (19) sich von der (32) unterscheidet, die im übrigen für das Einrasten des entsprechenden Randes des Deckels (12) vorgesehen ist.

7. Kanalausbildung nach einem der Ansprüche 2 oder 4, dadurch gekennzeichnet, daß die zwischen Gehäuse (11) und einem Verkleidungselement (69) zum Tragen kommenden Einsteckeinrichtungen für das Gehäuse (11) eine Zunge (73) aufweisen, die, auf der Fassade benachbart ihrem Durchgangsprofil (24) vorgesehen, sich parallel zu diesem Durchgangsprofil (24) erstreckt und für das Verkleidungselement (69) ein Rückführteil (74) aufweisen, welches auf einem Schenkel (71) dieses Verkleidungselementes (69) vorragend vorgesehen ist und über welches dieses sich auf dieser Zunge (73) verhaken kann.

8. Kanalausbildung nach Anspruch 7, dadurch gekennzeichnet, daß diese Zunge (73) des Gehäuses (11) selbst ein Rückführteil (75) aufweist, zu dem eine hierzu komplementäre Nut (76) auf dem (74) des Verkleidungselements (69) auf der Innenfläche des letzteren vorgesehen ist.

9. Kanalausbildung nach einem der Ansprüche 7 oder 8, dadurch gekennzeichnet, daß das Rückführteil (74) des Verkleidungselementes (69) Einsteckeinrichtungen aufweist, die für das Einrasten des entsprechenden Randes des Deckels (12) ausgebildet sind.

10. Kanalausbildung nach einem der Ansprüche 5 bis 9, dadurch gekennzeichnet, daß die zwischen dem Gehäuse (11) und einem Verkleidungselement (19, 69) zum Tragen kommenden Einsteckeinrichtungen für das Gehäuse (11) eine Nut (35), die seitlich auf einer entsprechenden Flanke (13) vorgesehen ist und parallel hierzu sich erstreckt und für das Verkleidungselement (19, 69) eine Zunge (36) aufweisen, welche komplementär zu dieser Nut (35) ist.

11. Kanalausbildung nach Anspruch 10, dadurch gekennzeichnet, daß diese Nut (35) des Körpers (11) zwischen der betrachteten Flanke (13) hiervon und einer Zunge (37) vorgesehen ist, die, fest bezüglich der Flanke (13), sich parallel zu dieser erstreckt.

12. Kanalausbildung nach einem der Ansprüche 10 oder 11, dadurch gekennzeichnet, daß diese Nut (35) des Gehäuses (11) sich zum Fuß der entsprechenden Flanke (13) hiervon am Übergang dieser Flanke (13) zur zugeordneten Grundplatte (14) erstreckt.

13. Kanalausbildung nach einem der Ansprüche 10 bis 12, dadurch gekennzeichnet, daß der Querschnitt des so einer der Flanken (13) des Gehäuses (11) zugeordneten Verkleidungselementes (19) allgemein von L-Konfiguration ist, wobei dieses Verkleidungselement (19) Schenkel (21, 22) aufweist, die im wesentlichen im Winkel zueinander angeordnet sind.

14. Kanalausbildung nach einem der Ansprüche 5 bis 9, dadurch gekennzeichnet, daß die Einsteckeinrichtungen, die zwischen dem Gehäuse (11) und einem Verkleidungselement (69) zum Tragen kommen, für das Gehäuse (11) eine Nut (80) umfassen, die außen auf der Grundplatte (14) vorgesehen ist, und für das Verkleidungselement (69) über ein Rückführteil (81) verfügen, welches vorspringend auf einem Schenkel (72) dieses Verkleidungselementes (69) angeordnet ist und durch welches dieses sich an dieser Grundplatte (14) verhaken kann.

15. Kanalausbildung nach Anspruch 14, dadurch gekennzeichnet, daß der Querschnitt des so einer der Flanken (13) des Gehäuses (11) zugeordneten Verkleidungselementes (69) im wesentlichen von U-Konfiguration ist, wobei dieses Verkleidungselement (69), jeweils zu beiden Seiten eines Mittelteiles (70) angeordnet, über zwei im wesentlichen parallel zueinander verlaufende Schenkel (71, 72) verfügt.

16. Kanalausbildung nach einem der Ansprüche 13 oder 15, dadurch gekennzeichnet, daß jedes Verkleidungselement (19) vorspringend auf seiner Innenfläche eine Zunge (94) aufweist, die so ausgebildet ist, daß sie mit ihrem Rand auf der betreffenden Flanke des Gehäuses (11) zur Anlage kommt.

17. Kanalausbildung nach einem der Ansprüche 1 bis 16, dadurch gekennzeichnet, daß der Deckel (12) ebenfalls eine Seele (40) aufweist, der ein Verkleidungselement (42) zugeordnet ist.

18. Kanalausbildung nach Anspruch 17, dadurch gekennzeichnet, daß dieses Verkleidungselement (42) beide Ränder der Seele (40), der er zugeordnet ist, umhüllt und daß gerade es außen die Einsteckeinrichtungen trägt, die für das Einrasten der Anordnung auf dem zugeordneten Gehäuse (11) sorgt.

19. Kanalausbildung nach Anspruch 17, dadurch gekennzeichnet, daß im Zusammenwirken mit seinem Verkleidungselement (42) auf den Flanken (13) des Gehäuses (11) das Verrasten des Deckels (12) auf dem Gehäuse (11) mit seiner Seele (40) erfolgt, wobei diese Seele (40) längs jedem ihrer Ränder eine Lippe (98) aufweist, über die sie in der Lage ist, sich gegen ein Rückführstück (30) der entsprechenden Flanke (13) des Körpers (11) zu verhaken.

20. Kanalausbildung nach einem der Ansprüche 2 bis 19, dadurch gekennzeichnet, daß ein Verkleidungselement (19, 69, 42) aus Metall besteht.

21. Kanalausbildung nach einem der Ansprüche 2 bis 19, dadurch gekennzeichnet, daß ein Verkleidungselement (19, 69, 42) aus Kunststoff besteht.

22. Kanalausbildung nach einem der Ansprüche 1 bis 21, dadurch gekennzeichnet, daß ein auf das Gehäuse (11) aufgesetztes Element ein Montageelement bildet, d. h. ein Verbindungsteil (55, 57, 58, 83, 85, 86), welches, wenigstens ein Verkleidungselement (19, 69) ersetzend, wie dieses Verkleidungselement mit Eingriffseinrichtungen versehen ist, die so ausgelegt sind, daß sie in Eingriff mit den entsprechenden des Gehäuses (11) kommen und so ausgelegt ist, daß deren Befestigung am Gehäuse (11) einer anderen Kanalausbildung sichergestellt ist.

FIG.1

FIG.2

FIG.3

FIG.4

FIG.5

FIG.6

2

FIG.8

FIG.9

FIG.10

FIG.11

# FIG.12

# FIG.13